# EUROPEAN PATENT SPECIFICATION

(11) **EP 1 013 386 B1**
(45) Date of publication and mention of the grant of the patent: **04.09.2002**
(21) Application number: 99123548.2
(22) Date of filing: 25.11.1999
(51) Int. Cl.: B29B 17/00, B29C 44/04, B29C 45/16, B29C 45/06

(54) **Method for manufacturing products by utilizing waste materials of various kind, and product obtained therewith**
Verfahren zur Herstellung von Produkten unter Anwendung von Abfallmaterialien verschidener Art, sowie das hergestellte Produkt
Procédé pour la fabrication des produits à base de déchets et le produit résultant

(30) Priority: 22.12.1998 IT TV980162
(43) Date of publication of application: 28.06.2000
(73) Proprietor: ELMA Chemicals S.r.l., 33100 Udine (IT)
(72) Inventor: Bertoglio, Mario, 33100 Udine (IT)
(74) Representative: Dalla Rosa, Adriano

(56) References cited:
- EP-A- 0 605 914
- EP-A- 0 698 531
- EP-A- 0 862 977
- WO-A-96/00643
- DE-A- 4 020 417
- DE-A- 4 213 951
- GB-A- 1 441 347
- US-A- 4 014 966
- US-A- 4 187 352
- US-A- 5 040 963

## Description

The invention refers to a method for manufacturing products by utilizing waste materials of various kind, such as heterogeneous plastic materials, wood, minerals, etc..., derived from recycling processes, differentiated waste collection systems, solid urban wastes, industrial processing scraps and the like, such products being utilizable for the most varied uses and in particular, but not exclusively, for manufacturing structural parts and outer finishes for office furnitures, furnitures for communities, cinematographic theatres, concert halls and the like.

The invention also relates to a product obtained with the method and the device referred to.

From EP 0605914 is known a method of moulding an elongated article by utilizing thermoplastic synthetic materials, which may be unsorted and uncleaned material, for instance low-grade household waste material, and material which may be a mixture of partly or wholly incompatible synthetic materials, and may contain sand, sawdust, wood, paper, cardboard and the like. The product is made of a core enclosed by an outer layer or skin, by utilizing a first synthetic waste material for making the core and a second thermoplastic material for making the outer skin and consisting of a material different from that of the core. The method consists of preparing an amount of fluidized first thermoplastic synthetic material (mixture) and to fed it into a mould so as to fill the mold only partly, for making the outer skin, and of preparing subsequently an amount of a fluidized second thermoplastic synthetic material (mixture) consisting of waste material and to fed it into the mold, together with a shaping expansion gas, for making the core.

The material of the core may be colored by the addition of suitable colorants. In this manner, the method according to EP 0605914 provides two separated and subsequent operation steps and the products obtained with this method are constituted by two separated and different materials, forming the core and the outer skin, which are overlapped to each other and aren't mixed together.

From EP 0862977 is known a method for manufacturing of products for building industry by utilizing household waste plastic materials of different compositions and percentages of the single components, which are introduced into separate containers, for being selectively shredded into small-sized particles, mixed, preheated up to a lower moisture grade, so that to remaining water acts as expanding agent, and heated and plasticized in an injection machine. The plasticized mass of each component is injected selectively on a mold and forms a product having on its outer edges a structure denser than that of its core, and the structure of the outer edges is formed by the plastic materials having higher flowability such polyethylene and polyamide, which are compressed in that area by the pressure generated by the expansion of the water vapor obtained under heat from the water moisture, while the core is formed by particles of plastic materials having greater sizes than those of the outer edges. Therefore, this method utilizes only plastic materials and waste plastic materials, and the water vapor as expanding agent for forming the product outer edges only with such plastic materials.

From EP 0698531 is known a method for manufacturing a bumper for automobiles, by utilizing only waste plastic materials of different kind which are pulverized and plasticized into injection machines. The bumper is constituted by an outer layer of a polyolefine-based resin composition modified by an olefinic elastomer and the polyethylene, and by a core enclosed by the outer layer and formed by a polyolefine-based resin composition and polyethylene. The method consists of utilizing a first and a second injection units separated from each other, into which are contained respectively the plasticized materials of the outer layer and the core, which units are provided with an injection head having an injection channel common to both the units, wherein the materials are injected separately on a mold, in a manner that into such mold it is injected in a first step only the material of the outer layer and subsequently in a second step only the material of the core, which latter distributes itself under pressure inside the material of the outer layer. In this manner, the method according to EP 0698531 provides two separated and subsequent operation steps, by utilizing only waste plastic materials, and the products obtained with this method are constituted by two separated and different plastic materials, forming the outer layer and the core, which are overlapped to each other and aren't mixed together.

From US 5040963 is known a multi-cavity injection mold for simultaneously injection molding a plurality of multi-layer articles by utilizing virgin plastic materials and waste plastic materials (i.e.PET). The plastic material is injected in different operation steps for producing preforms of the articles, namely in a first step it is injected the molten virgin plastic material for forming the interior and exterior surface layers of the preform, which layers are cooled quickly by a cooling liquid circulating in a mold cooling system, and in a second step it is injected the molten waste plastic material over the previous material.

In this manner, the articles made according to US 5040963 are formed by separated layers of plastic materials overlapped to each other, namely of waste plastic materials overlapped to plastic material, during two subsequent injection steps. In this case, the materials of the overlapped layers aren't mixed together.

From US 4014966 is known a method for injection molding a composite foamed body having foamed core and a continuous surface layer, wherein the body is formed by synthetic thermoplastic resin material and the core is formed by synthetic thermoplastic resin material containing an expanding or foaming agent.

The method is performed by injecting in a mold in a first step the molten material of the body and in a second step the molten material of the core, so as to spread the material of the body along the walls of the mold cavity. In this manner, the products made according to US 4014966 are formed by utilizing only plastic materials which are injected in the mold in two subsequent injection steps.

The present invention relates to a method for manufacturing products by utilizing waste materials of various kind, which is performed in a different manner with respect to what disclosed by the art represented by the above discussed references, which method permits the materials to be effectively and homogeneously mixed together, also in presence of heterogeneous waste materials having poor compatibility and blendability, and without giving rise to the risk of damages of the materials and the possible development of toxic and noxious substances during processing thereof

The invention also relates to a product obtained with the method referred to.

The invention will be more readily understood from the description given below, by way of non-limiting example only, and with reference to the accompanying drawings, in which :
- Figure 1 shows schematically the device used for manufacturing products in accordance with the present manufacturing method;
- Figure 2 shows schematically a part of the manufacturing device of Fig. 1 ;
- Figure 3 shows a front view of a product capable of being manufactured with the method in accordance with the invention;
- Figure 4 shows a schematical side view of the product of Fig. 3,
- Figure 5 shows a schematical and partially cutaway front view of the product of Fig. 3 ;
- Figure 6 shows a front view of a further product capable of being manufactured with the present manufacturing method;
- Figure 7 shows a side view of the product of Fig. 6;
- Figure 8 shows a schematical and partially cutaway front view of the product of Fig. 6;
- Figure 9 shows a front view of another product capable of being manufactured with the present method;
- Figure 10 shows a side view of the product of Fig. 9 ;
- Figure 11 shows a schematical and partially cutaway front view of the product of Fig. 9 ;
- Figure 12 shows a schematical and partially cutaway front view of another product capable of being manufactured with the present method ;
- Figure 13 shows a side view of the product of Fig. 12 ;
- Figure 14 shows a front view of another product obtained with the method in accordance with the invention;
- Figure 15 shows a schematical and partially cutaway plan view of the product of Fig. 14 ;
- Figure 16 shows a side view of another product capable of being manufactured with the present method
- Figure 17 shows a schematical and partially cutaway plan view of the product of Fig. 16.

The present invention relates to a method for manufacturing products of various kind, by using waste materials wood, minerals, metallic materials, heterogeneous plastic materials, deriving from sorted-out waste collection processings of solid urban wastes, industrial processing scraps, recycling processes and the like, whose composition is made up by polyolefins (PE-LD, PE-LLD, PE-HD, PE-MD, PPO-PPC), which constitute up to approx. 80% of total wastes, and a heterogeneous composition of PET, PA, PVC, ABS, PS, POM, and various polymeric alloys, which constitute approx. 20% of the wastes.

The invention also relates to the products obtained with this manufacturing method, which advantageously are constituted by structural parts and external finishes for chairs and seats for office desks, communities, cinematograph theatres, concert halls, households, etc.., furnitures of different kind and related component parts such as doors, shutters, frames, etc.., but the products can of course be also of any other type and for the most varied applications, provided that they are compatible with the present manufacturing method.

These waste materials can be used either separately or in combination with raw materials of traditional type (wood, plastics, metallic materials and related alloys, etc..), these latter preferably with reduced percentages as compared with to the raw materials, so as to cut in a considerable manner the consumptions and the related costs thereof.

In the present method, the employed waste materials along with the raw materials are shredded in advance into tiny particles with a size of about 1-10 mm. and adequately mixed together, by utilizing equipment of a traditional type, thereby forming a compound to which there are added pre-determined amounts of per se known heat-stabilizing substances, in the case in which in the same there are contained PVC parts. Since in practice the available waste materials are constituted to a large extent by PE and PP in differing percentages, it ensues that such plastic materials will also be present to a prevailing extent in the compounds used to carry out the manufacturing method according to the invention.

To the so formed compound it is then added a reduced percentage of blowing agent.

Such a blowing agent is constituted by POAZCD tradename in Italy in percentages ranging preferably from approx. 0.2% to 1% with respect to those of the compound.

The so obtained compound represents a first component adapted to form the not visible inner portion of each product manufactured with the present method, which is fed into a traditional plastic processing machine, such as an extruder, wherein such blend is heated up in order to bring about the selective melting of the plastic materials, which, as already known, have different melting temperatures, comprised between approx. 110 ° C and 140 ° C for LDPE, PPE/LLD, MDPE, HDPE, approx. 160 ° C and 170 ° C for PP, ABS, PS and PVC, and approx. 270° C/280° C for PA and PET.

In particular, in the present case this compound is heated up to a temperature comprised preferably between 180 ° C and 210 ° C, thereby causing the selective melting of the plastic materials with a progressively increasing melting temperature, until to form a plasticized mass thereof, in which condition the remaining portion of plastic materials with melting temperatures higher than such heating temperature is softened but not molten, thereby being mixed with said molten mass and included therein, thereby acting as inert filling materials.

In the case that such a compound contains parts of PVC, which at the above mentioned heating temperature of approx. 180 ° C - 200 ° C would degrade under formation of chlorine, which reacts with the other component substances of the plastic materials under formation of undesired compounds, and would char the other plastic materials in the compound, such PVC is molten without giving rise to the cited drawbacks thanks to the presence of the above mentioned heat stabilizing substances.

At the end of this operative phase, the plasticized mass containing the not yet molten filler plastic materials is delivered from the employed processing machine and is available for forming the desired products as it will be described.

The present method also foresees that it is prepared a second component of the products to be manufactured, adapted to coat the previous inner portion to form the visible outer portion of each product, which also in this case is obtained in the form of a compound constituted by waste materials and raw materials, which are again shredded in advance and mixed together as previously, however without addition of heat stabilizing substances and blowing agent, and addition of per se known colorants (master batches) in the desired hues, in amounts reduced with respect to those ones of the compound and sufficient to effectively colour the manufactured products.

This compound is fed into a conventional plastic material processing machine, such as an extruder, which is different and separated with respect to the preceding machine, in which such compound is heated up so as to bring about the selective melting of the plastic materials having different melting temperatures, comprised within the afore indicated ranges.

Even in this case, the compound is heated up to a temperature comprised between approx. 180 ° C and 210° C, thereby behaving exactly as the previously described compound, and at the end of this operative phase is again available a plasticized mass for forming the desired products.

In the subsequent operative phase of the present method, this latter plasticized mass is delivered from the employed processing machine and injected into the moulding cavity of at least a separate mould shaped with the form of the respective parts to be manufactured, and into said cavity it is injected in the same time the plasticized mass of the first component part of the product previously described, coming from the remaining processing machine, and under this condition both the plasticized masses are mixed homogeneously with each other at the same time, so that the compound with a lower density and higher flowability will tend to arrange itself against the inner walls of said moulding cavity, thereby forming a thin uniform layer costituting the outer coating of each finished product, while in turn the compound with higher density and lower flowability (as determined by the inert filling materials included in the compound) will position itself in the space comprised between the mould punch and matrix, not occupied by the preceding compound, thereby forming the compact central core of each finished product.

At the end of moulding operation, the denser compound forming the product inner portion swells progressively owing to the presence of the blowing agent, which as already known reacts in the presence of high heating temperatures, thereby determining a progressive compression action exerted from the interior to the exterior of the product being manufactured, and consequently an adhesion of the outer coating of the same product against the walls of the mould inner cavity, which adhesion is opposite considerably to the unavoidable shrinkage of the mass of material of such a product which occurs during the subsequent cool-down phase of this latter, and which thereby permits practically to prevent deformations and dimensional variations of the finished products at the end of moulding operation, while at the same time assuring an extremely satisfactory aesthetical outlook of the same products.

It should be noticed that, thanks to the presence of the two afore mentioned components, formed by plastic materials and other materials wasted or not wasted, unavoidably having different density and flowability, during the contemporary moulding thereof inside the conventional moulds it will be always caused a different distribution of the same materials inside each mould, depending on the respective density and flowability thereof, which in turn will produce unavoidably the formation of a less dense and more fluid outer layer and a more dense and less fluid inner layer, that will perfectly blend and amalgamate with such outer layer, and such distribution of the materials will be always produced independently from the used materials and from the fact that the compounds of the two components are introduced indifferently in either one of the employed processing machines.

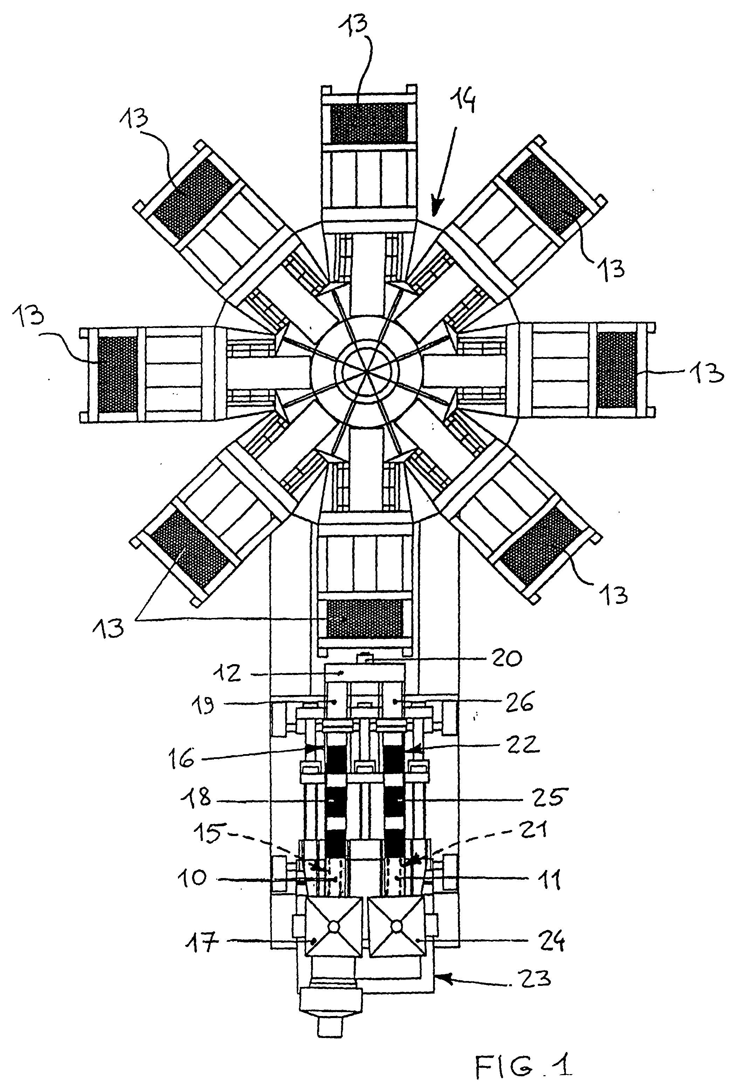

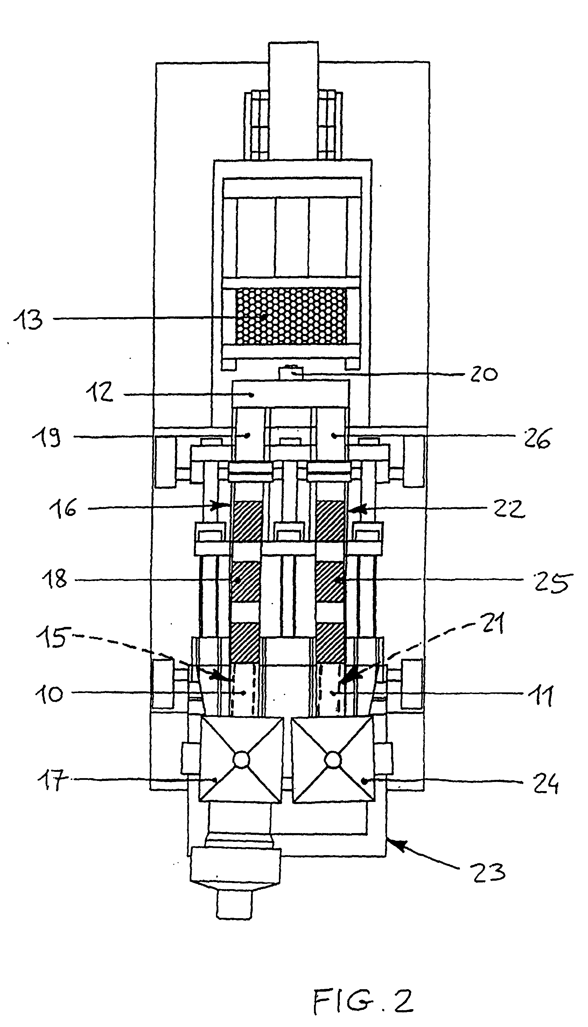

Turning now to the Figs. 1-2, in which it is shown a device provided for manufacturing products according to the present method, one can notice that it is substantially constituted by a first plasticizing-injection unit 10 for the preparation of the plasticized compound of the first component, a second plasticizing-injection unit 11 separated and adjacent with respect to the preceding unit, for the preparation of the plasticized compound of the second component, at least an injection channel 12 common to both the plasticizing-injection units 10 and 11, for mixing and injecting contemporaneously the compounds from these latter, and a set of moulds 13 for shaping the products to be manufactured with the respectively required shapes, sizes and aesthetics, by means of the use of the so mixed compounds, said moulds being made preferably as a rotating carrousel 14 in the present case, but they can also be made with different configurations known from the art.

In particular, the first plasticizing-injection unit 10 is constituted preferably by at least an extrusion screw 15 having a variable rotation speed, with a L/D (lenght-to-diameter) ratio of at least 20-to-1, and a compression ratio ranging from 1.2 to 2.8/3, which screw is housed in an elongated rectilinear barrel 16, whose initial zone is associated to a large-capacity hopper 17, into which there are fed the waste materials and raw materials used, adequately mixed and shredded, and into which there are housed some electric heating elements 18 of suitable output, for heating up to plasticization of the compound formed by said waste materials and raw materials, during the continuous rotation of the extruder screw 15, while the terminale zone of said barrel 16 is provided with an injector 19 communicating with the injection channel 12, for delivering into this latter the plasticized compound determined by the continuous rotation of said screw, and in turn such injection channel 12 is provided with a co-injection head 20 for the selective injection of this plasticized compound into each one of the moulds 13 which is respectively positioned in coinciding relationship to the same head.

This compound is added with stabilizing and blowing agents in the manner and to the purposes previously described, and is heated up to a temperature of approx. 180 ° C- 210 ° C so as to cause the melting and plasticizing of all the waste materials having melting temperatures equal or lower than these temperatures, as well as the inclusion of the remaining waste materials with higher melting temperatures, and the consequent formation of inert filling materials which will contribute to stiffen and consolidate the compound when this will cool down after having been extracted from the associated forming mould 13.

As soon as said plasticization temperature is reached, such compound is ready for being injected through the injection channel 12 into the inner cavity of the mould 13 being respectively positioned in coincident position to the same channel.

In turn, the second plasticizing-injection unit 11 is constituted preferably by at least an extrusion screw 21 having variable rotation speed, and with L/D (lenght-to-diameter) and compression ratios identical to those of the preceding screw 15, which screw is also housed into an elongated rectilinear barrel 22 arranged adjacent parallelly to the previous barrel 16, and joined thereto with a load-bearing structure 23 common to both the plasticizing-injection units, wherein the initial zone of such barrel 22 is associated to a large-capacity hopper 24, into which there are fed the waste materials and the raw materials used, appropriately mixed and shredded, and into which there are housed some electric heating resistances 25 of suitable output, for the same previously described functions, and in turn the terminal zone of such barrel 22 is provided with an injector 26 communicating with the injection channel 12, for the injection in this latter of the plasticized compound determined by the continuous rotation of the screw 21.

This compound, which generally is formed by PPE and PE which are to be found to a large extent in the above mentioned waste materials, is added with colorants (master batches) of known type and in the desired hues, and subsequently heated up to a temperature of approx. 180 ° C- 210 ° C so as to perform the same functions of the afore compound.

Thereafter, this compound is ready for being injected through the injection channel 12 into the inner cavity of the mould 13 respectively positioned in coinciding relationship to the same channel.

When both plasticized compounds are ready, it is effected the contemporaneous injection thereof from the injection channel 12, through the common co-injection head 20, into the mould 13 respectively coinciding with such a head, by actuating in rotation both the extrusion screws 15 and 21, with consequent mixing and amalgamating of the compounds of both the components of each product, and swelling of the compound forming the product inner part, for the already mentioned reasons, wherein owing to the different density and flowability of such compounds it is determined the distribution of the relative materials in the manner and for the purposes previously described.

Finally, it should be noticed that the moulds 13 may be made of different materials, such as for instance aluminium, steel, special alloys, etc..., and will be provided with appropriate cooling channels (not shown) or other cooling arrangements adapted to cause the cooling down of the mould after the filling of its inner cavity with the cited compounds, in order to shorten significantly the cooling down phase of the products extracted from the mould after the moulding operation.

In a preferred manner, the compounds are used in the carrousel-like arrangement, constituted by more mould-carrying stations in which each station is equipped so as to be able to cool down the mould upon the compounds having been injected into it, and is arranged so as to be able to extract the finished product therefrom upon conclusion of the cool-down phase.

The extraction of the finished products from each mould and the finishing of the same products will include a trimming of flash or gate provided on each product and the possible embossing, if needed, or also other aesthetical or structural finishes.

Consequently, the use of the present method and device for manufacturing of products enables in a simple manner to recover and recycle effectively the heterogeneous waste materials, and to mix homogeneously the same, without problems of incompatibility, blendability and damageability of the materials involved, and without development of toxic and noxious substances during processings, with consequent considerable reductions in overall cost burdens owing to the low costs of such waste materials, by avoiding also the waste disposal problem.

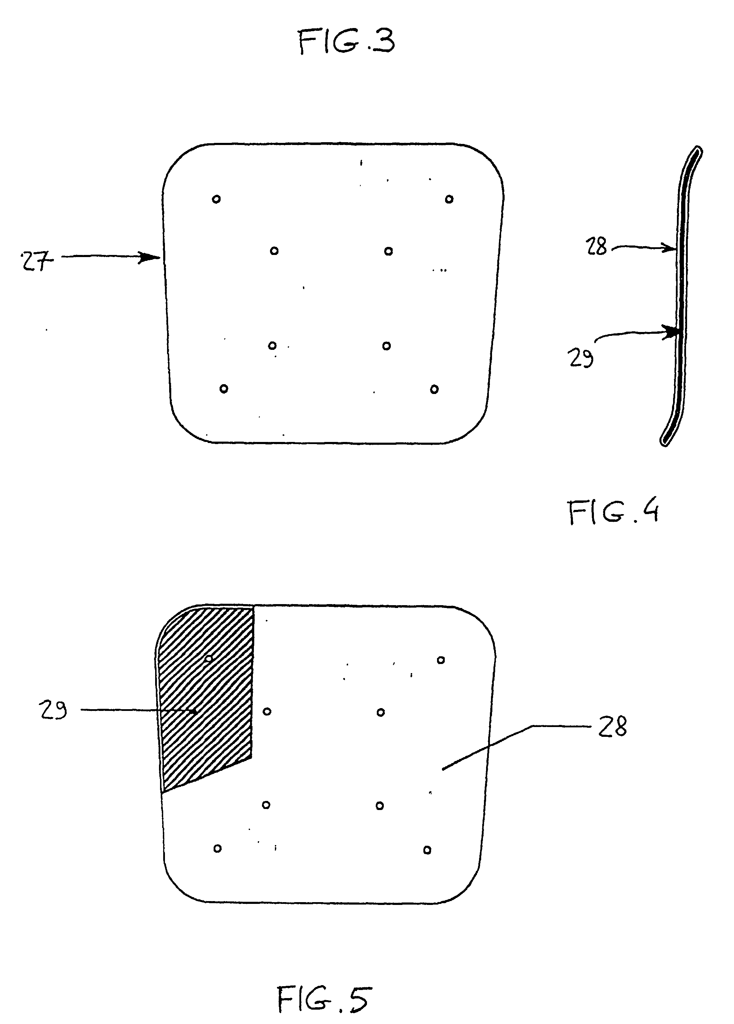

By referring now to the remaining Figures 3 through to 17, it can be noticed that in the same there are represented products of various kind capable of being manufactured with the method according to the invention, which may be constituted by structural parts and outer finishes for office furniture, furniture for communities, cinematograph theatres, concert halls and the like, by furniture of various kind and related component parts such as doors, shutters, frames, etc...or also products of the most different types and uses.

In the Figures 3 to 5, in particular, it is shown by way of example a sitting surface 27 for a chair or armchair for office desk, with applied bosses, made of almost quadrangular shape and reduced thickness (see Fig. 4), and constituted by a layered structure formed by a thin outer coating portion 28 with the compound of the afore mentioned second component, and a thicker inner portion 29 with the compound of the afore mentioned first component.

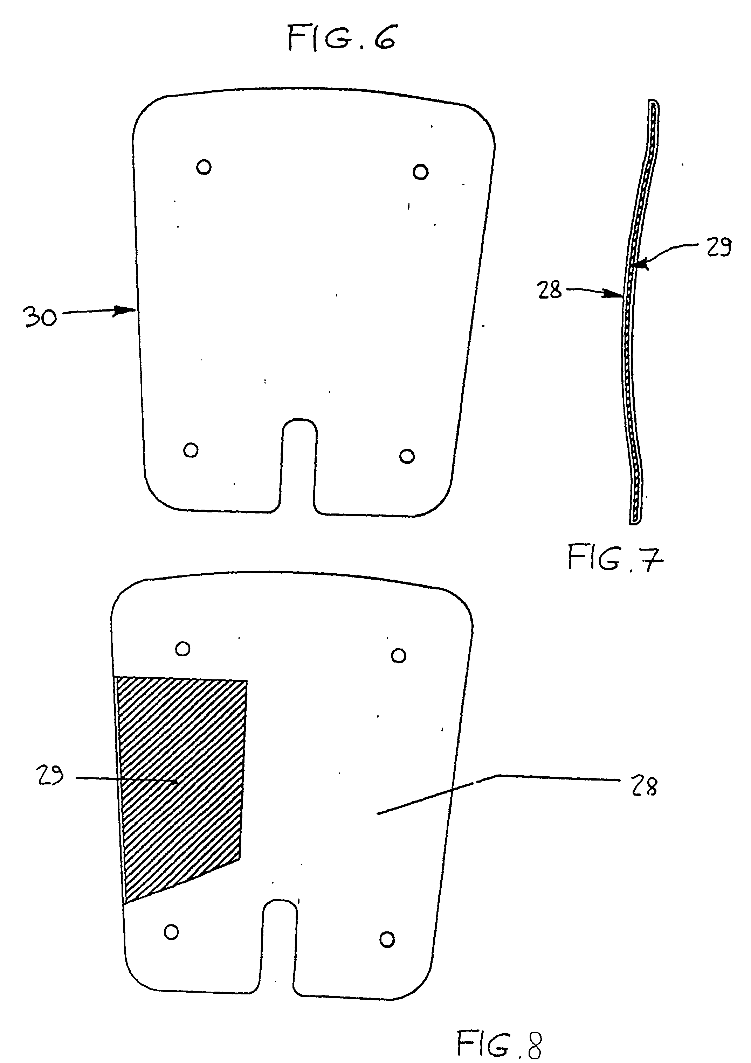

In the Figures 6 to 8 it is shown a back 30 for office furniture, again of almost quadrangular, downward tapered shape, constituted by a layered structure formed with the same portions of the preceding Figures, which therefore are marked with the same reference numerals.

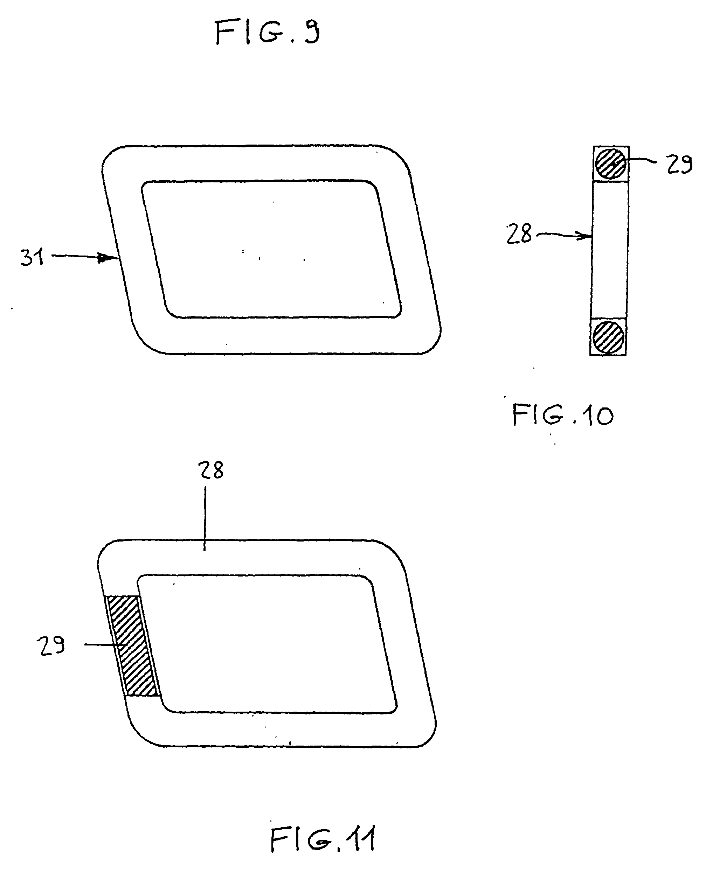

In the Figures 9 to 11 it is shown an arm 31 for office furniture, of a rhomboidal shape, whose layered structure is identical to that one of the Figs. 3 to 17, and therefore is marked with the same reference numerals.

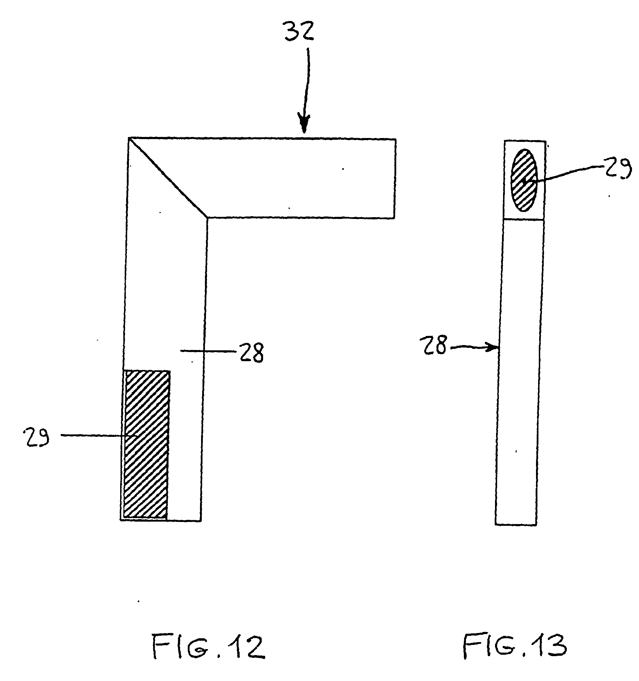

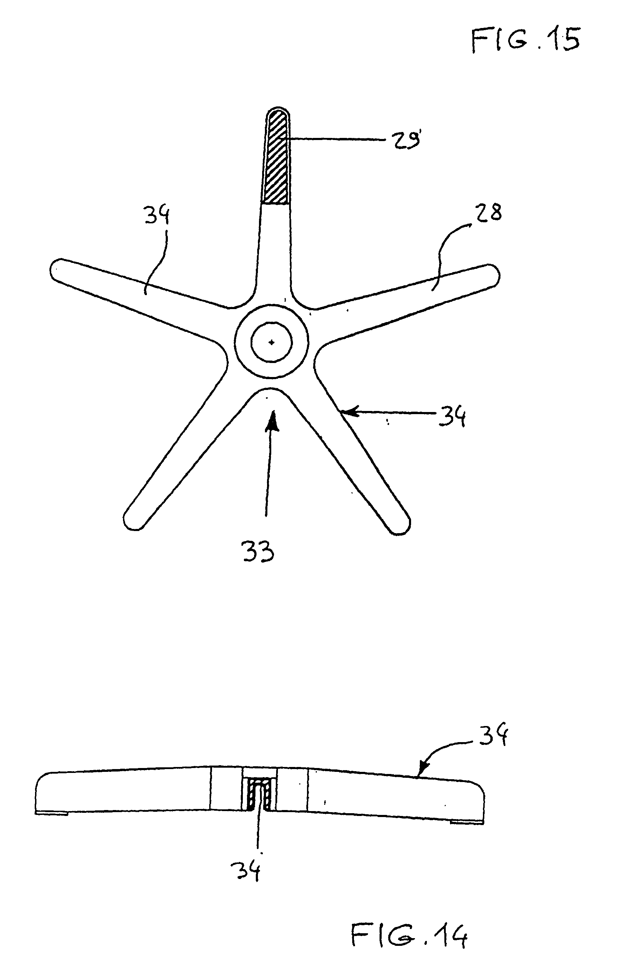

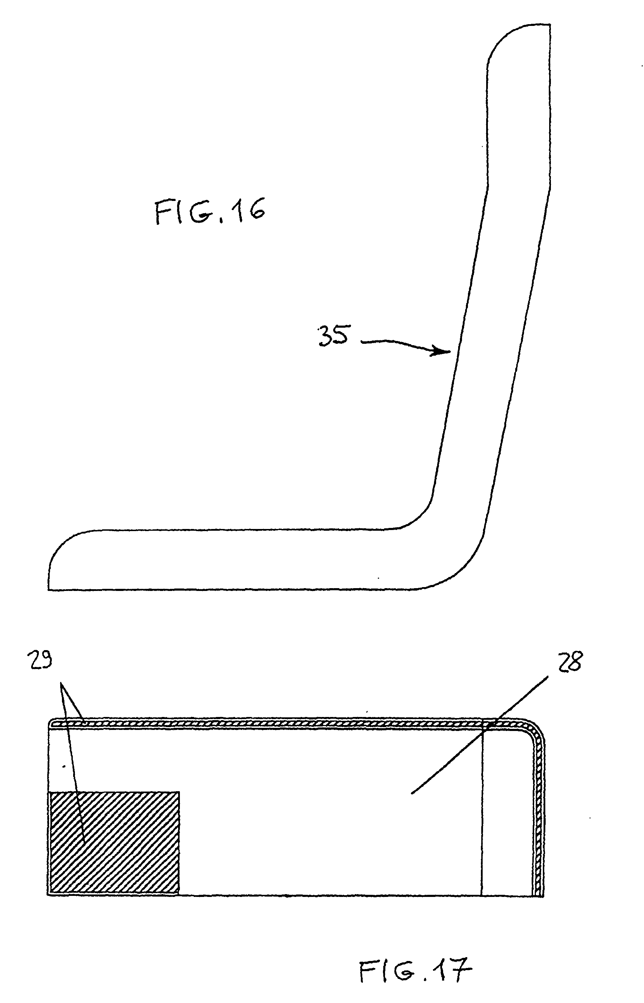

Finally, even the remaining products illustrated by mere way of the example are formed with a layered structure in the same manner and therefore identified with the same reference numerals, and in particular the Figs. 12 and 13 show a door frame 32 for furniture of various kind, Figs. 14 and 15 show the armchair base 33 for office furniture, formed by a set of spokes 34 in a star-like arrangement, and Figs. 16 and 17 show the shell 35 of an armchair for use in a manager office.

Advantageously, all these component parts for furniture are moulded with moulds carried by a rotating carrousel-like arrangement of the afore described type, in that the thickness of these products (usually, of at least 6 mm.) requires a cool-down time that cannot be shorter than a given limit (approx. 150 sec.), which is complied with since the hot moulded products are rotated in the carrousel-like arrangement from the moulding station through to the unloading station, otherwise it would be determined permanent distorsions of the same products that would alter the structure thereof.

Such a cool-down time limit might be complied with also by using injection-moulding machines of a traditional single-station, however in this case with manufacturing costs extremely high and of absolutely unsustainable levels.

## Claims

1. Method for manufacturing products by utilizing heterogeneous waste materials such as wood, minerals, metallic materials and plastics, derived from recycling processes, sorted-out waste collection systems, solid urban wastes, scraps of industrial processings and the like, said waste materials having different melting temperatures and being constituted prevailingly by polyolefins (PE-LD, PE-LLD, PE-HD, PE-MD, PPO, PPC) and a heterogeneous composition of PET, PA, PVC, ABS, PS, POM and various polymeric alloys, with different and variable percentages of the individual components and by utilizing moulds (13) and at least a first and a second plasticizing-injection unit (10, 11) separated from each other, provided with heating means (18 ; 25) and provided respectively with hoppers (17 ; 24), at least a respective barrel (16 ; 22) containing a corresponding rotating extrusion screw (15 ; 21) with variable rotation speed, and at least an injection channel (12) common to both said plasticizing-injection units (10, 11), and provided with at least a co-injection head (20) adapted to selectively coincide with each one of said moulds (13), said waste materials being in succession shredded into small-sized particles and mixed together with apparatuses of traditional kind, thereby forming a first compound constituting a first component of each product, adapted to provide for the not-visible inner portion of each product, and a second compound separated from the previous one constituting a second component of each product, adapted to coat said inner portion and provide for the visible outer portion of each product, said first and second compounds being fed into said hoppers (17 ; 24) and from said hoppers (17 ; 24) being fed respectively into said first plasticizing-injection unit (10) and said second plasticizing-injection unit (11), and heated therein, the method utilizing also heat-stabilizing means, blowing means and colouring means, **characterized in that** said first compound is added to the blowing means POAZCD and to the heat-stabilizing means, and said second compound is added to the colouring means, said first and second compounds being heated up to a pre-determined heating temperature, thereby bringing about respectively a first and a second plasticized mass, whose raw materials having melting temperatures higher than said heating temperature are softened but not molten and included in the same mass, thereby behaving like inert filling materials, said first and second plasticized mass being injected at the same time from the respective first and second plasticizing-injection units (10, 11) through said common injection channel (12) into said mould (13), so that the compound having lower density and higher flowability forms said product outer portion and the compound having higher density and lower flowability forms said product inner portion.

2. Method according to claim 1, **characterized in that** said blowing means POAZCD is used in percentages comprised between approx. 0,2 and 1% with respect to those of the related compound.

3. Method according to claim 1, **characterized in that** said first and second compound is heated up to a temperature comprised preferably between 180° to 210° C.

4. Product obtained with the method according to claims 1-3, characterized for being constituted by a layered structure formed by a thin outer coating portion (28) with said second compound and a thicker inner portion (29) with said first compound.

5. Product according to claim 4, characterized for being constituted by structural parts and outer finishes for office furnitures (sitting surface 27, back 30, arm 31), general furniture (door frame 32), furniture for communities, cinematograph theatres, concert halls and the like.

## Patentansprüche

1. Verfahren zur Herstellung von Produkten unter Anwendung . von Abfallmaterialien, wie beispielsweise Holz, Mineralien, metallische Materialien und Kunststoffen, die aus Recycling-Prozessen, Müllsortierungssystemen, festem Stadtmüll, Schrott industrieller Fertigungen und dergleichen gewonnen wurden, wobei die Abfallmaterialien unterschiedliche Schmelztemperaturen aufweisen und überwiegend durch Polyolefine (PE-LD, PE-LLD, PE-HD, PE-MD, PPO, PPC) und eine heterogene Zusammensetzung von PET, PA, PVC, ABS, PS, POM und verschiedener polymerer Legierungen mit unterschiedlichen und variablen Anteilen der Einzelkomponenten gebildet sind, wobei Formen (13) und mindestens eine erste und zweite Plastizier-Einspritzeinheit (10, 11), die voneinander getrennt sind, und Heizeinrichtungen (18; 25) aufweisen, verwendet werden, und mit entsprechenden Aufgabetrichtern (17; 24) und mindestens einem entsprechenden Zylinder (16; 22) versehen sind, welche entsprechende drehende Extrusionsschnecken (15; 21) mit variabler Drehgeschwindigkeit enthalten, wobei mindestens ein Injektionskanal (12) gemeinsam für beide Plastizier-Injektionseinheiten (10, 11) vorgesehen und mit mindestens einem Koinjektionskopf (20) versehen ist, welcher wahlweise mit jeder der Formen (13) verbindbar ist, wobei die Abfallmaterialien nacheinander in Teilchen kleiner Grösse geschreddert und mit Vorrichtungen üblicher Art miteinander vermischt werden, und hierdurch eine erste Masse, welche eine erste Komponente jedes Produkts bildet, erzeugt wird, die geeignet ist, den nicht sichtbaren Innenteil jedes Produktes zu bilden, und eine zweite Masse getrennt von der vorhergehenden, welche eine zweite Komponente eines jeden Produktes bildet, die geeignet ist, den Innenteil zu überziehen und den sichtbaren Aussenteil jedes Produktes zu bilden, wobei die erste und die zweite Masse in die Aufgabetrichter (17; 24) und von den Aufgabetrichtern (17; 24) in die erste Plastizier-Injektionseinheit (10) bzw. die zweite Plastizier-Injektionseinheit (11) eingespeist werden, darin erwärmt werden, wobei das Verfahren ferner Wärmestabilisierungsmittel, Treibmittel und Färbemittel verwendet, **dadurch gekennzeichnet, dass** die erste Masse mit dem Treibmittel POAZCD und den Wärmestabilisierungsmitteln versetzt wird, und dass der zweiten Masse die Färbemittel zugegeben werden, dass die erste und die zweite Masse bis zu einer bestimmten Heiztemperatur erwärmt werden und hierdurch eine erste bzw. eine zweite plastizierte Masse erzeugt werden, deren Rohmaterialien Schmelztemperaturen aufweisen, die höher sind als die Heiztemperatur und erweicht, jedoch nicht geschmolzen werden und in der gleichen Masse enthalten sind und sich dadurch wie inerte Füllmaterialien benehmen, dass die erste und die zweite plastizierte Masse gleichzeitig von der ersten bzw. zweiten Plastizier-Injektionseinheit (10) durch den gemeinsamen Injektionskanal (12) in die Form (13) eingespritzt werden, derart, dass die Masse mit niedrigerer Dichte und höherer Fliessfähigkeit den Aussenteil des Produkts und die Masse mit der höheren Dichte und der niedrigeren Fliessfähigkeit den Innenteil des Produkts bildet.

2. Verfahren nach Anspruch 1, **dadurch gekennzeichnet, dass** das Treibmittel POAZCD in Anteilen zwischen etwa 0,2 und 1% bezüglich der dazugehörigen Masse verwendet wird.

3. Verfahren nach Anspruch 1, **dadurch gekennzeichnet, dass** die erste und die zweite Masse bis zu einer Temperatur erhitzt werden, welche bevorzugt zwischen 180° und 210°C liegt.

4. Produkt erhalten nach dem Verfahren gemäss den Ansprüchen 1 bis 3, **dadurch gekennzeichnet, dass** es durch eine geschichtete Struktur gebildet ist, welche aus einem dünnen äusseren Überzugsabschnitt (28) aus der zweiten Masse und einem dickeren inneren Abschnitt (29) aus der ersten Masse besteht.

5. Produkt nach Anspruch 4, **dadurch gekennzeichnet, dass** es durch strukturelle Teile und Fertigteile für Büromöbel (Sithflächen 27, Rücklehnen 30, Arme 31) allgemeine Möbel (Türrahmen 32), Möbel für Gemeinden, Filmtheater, Konzertsäle und dergleichen gebildet ist.

## Revendications

1. Procédé de fabrication de produits au moyen de déchets hétérogènes comme le bois, les minéraux, les matières métalliques et plastiques, issus de procédures de recyclage, de systèmes de collecte de déchets triés, de déchets urbains solides, de déchets industriels et similaires, lesdits déchets présentant différentes températures de fusion et étant principalement composés de polyoléfines (PE-LD, PE-LLD, PE-HD, PE-MD, PPO, PPC) et une composition hétérogène de PET, PA, PVC, ABS, PS, POM et plusieurs alliages polymères, contenant des pourcentages variables et différents de composants individuels et au moyen de moules (13) et d'au moins une première et une deuxième unités d'injection-plastification (10, 11) séparées l'une de l'autre, dotées de moyens de chauffage (18 ; 25) et dotées respectivement de trémies (17 ; 24), au moins un cylindre (16 ; 22) respectif contenant une vis d'extrusion rotative (15 ; 21) ayant une vitesse de rotation variable, et au moins un canal d'injection (12) commun aux deux dites unités d'injection-plastification (10, 11) et doté d'au moins une tête de co-injection (20) conçue pour coïncider de façon sélective avec chacun desdits moules (13), lesdits déchets étant successivement déchiquetés en particules de petite taille et mélangés ensemble dans des appareils de type traditionnel, formant ainsi un premier composant constituant un premier composé de chaque produit, conçu pour former la partie interne non visible de chaque produit, et un deuxième composant séparé du précédent, constituant un deuxième composé de chaque produit, conçu pour revêtir ladite partie interne et fournir la partie externe visible de chaque produit, lesdits premier et deuxième composants étant introduits dans lesdites trémies (17 ; 24) et, desdites trémies (17 ; 24), introduits ensuite respectivement dans ladite première unité d'injection-plastification (10) et ladite deuxième unité d'injection-plastification (11) puis chauffés dans celles-ci, le procédé utilisant également des moyens de stabilisation thermique, des moyens de soufflage et des moyens de coloration, **caractérisé en ce que** ledit premier composant est ajouté aux moyens de soufflage POAZCD et aux moyens de stabilisation thermique, et **en ce que** ledit deuxième composant est ajouté aux moyens de coloration, lesdits premier et deuxième composants étant chauffés jusqu'à une température de chauffage prédéterminée, afin d'obtenir respectivement une première et une deuxième masses plastifiées, dont les matériaux bruts ayant des températures de fusion supérieures à ladite température de chauffage sont ramollis mais pas fondus et inclus dans la même masse, se comportant ainsi comme des matériaux de remplissage inertes, lesdites première et deuxième masses plastifiées étant injectées en même temps depuis les première et deuxième unités d'injection-plastification (10, 11) respectives par le biais dudit canal d'injection commun (12) dans ledit moule (13), de telle sorte que le composant ayant la densité la plus faible et la coulabilité la plus forte forme ladite partie externe du produit et que le composant ayant la densité la plus forte et la coulabilité la plus faible forme ladite partie interne du produit.

2. Procédé selon la revendication 1, **caractérisé en ce que** lesdits moyens de soufflage POAZCD est utilisé en pourcentage, compris entre environ 0,2 et 1 % par rapport à ceux du composant auquel il est lié.

3. Procédé selon la revendication 1, **caractérisé en ce que** lesdits premier et deuxième composants sont chauffés à une température comprise de préférence entre 180 °C et 210 °C.

4. Produit obtenu grâce au procédé selon les revendications 1 à 3, **caractérisé en ce qu'**il est constitué d'une structure en couches formée d'une partie de revêtement externe mince (28) avec ledit deuxième composant et d'une partie interne plus épaisse (29) avec ledit premier composant.

5. Produit selon la revendication 4, **caractérisé en ce qu'**il est constitué de parties structurelles et de finitions externes pour meubles de bureau (assise 27, dossier 30, accoudoir 31), des meubles classiques (cadre de porte 32), des meubles pour les collectivités, des salles de cinéma, de concert et similaire.
